(19) Europäisches Patentamt
European Patent Office
Office européen des brevets

(11) EP 3 523 342 B1

(12) **EUROPEAN PATENT SPECIFICATION**

(45) Date of publication and mention of the grant of the patent:
**21.04.2021 Bulletin 2021/16**

(21) Application number: **17777846.1**

(22) Date of filing: **22.09.2017**

(51) Int Cl.:
***C08F 110/06*** *(2006.01)* ***C08F 210/16*** *(2006.01)*
***C08L 23/06*** *(2006.01)* ***B33Y 70/00*** *(2020.01)*

(86) International application number:
**PCT/EP2017/074123**

(87) International publication number:
**WO 2018/065244 (12.04.2018 Gazette 2018/15)**

(54) **USE OF A PLATE COMPRISING A POLYOLEFIN COMPOSITION FOR 3D PRINTER**

VERWENDUNG EINER PLATTE MIT POLYOLEFINZUSAMMENSETZUNG FÜR 3D-DRUCKER

UTILISATION D’UNE PLAQUE COMPRENANT UNE COMPOSITION POLYOLÉFINE POUR UNE IMPRIMANTE 3D

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.10.2016 EP 16192535**

(43) Date of publication of application:
**14.08.2019 Bulletin 2019/33**

(73) Proprietor: **Basell Poliolefine Italia S.r.l.**
**20121 Milano (IT)**

(72) Inventors:
- **DE PALO, Roberto**
  **44122 Ferrara (IT)**
- **CAVALIERI, Claudio**
  **44122 Ferrara (IT)**
- **GALVAN, Monica**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**WO-A1-2015/161398 WO-A1-2016/207235**
**WO-A1-2016/207236**

- **O.S. CARNEIRO ET AL: "Fused deposition modeling with polypropylene", MATERIALS & DESIGN, vol. 83, 20 June 2015 (2015-06-20), pages 768-776, XP055312954, AMSTERDAM, NL ISSN: 0264-1275, DOI: 10.1016/j.matdes.2015.06.053**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 523 342 B1

## Description

### FIELD OF THE INVENTION

The present disclosure relates to the use of a sheet or film comprising a polyolefin composition A) as a top layer of a plate for use in an extrusion-based additive manufacturing system.

### BACKGROUND OF THE INVENTION

An extrusion-based 3D printer is used to build a 3D model from a digital representation of the 3D model in a layer-by-layer manner by extruding a flowable modeling material. For example, a filament of the modeling material is extruded through an extrusion tip carried by an extrusion head, and is deposited as a sequence of roads on a substrate in an x-y plane. The melted material can also derive from a direct deposition from a screw extruder or similar, or sintered from powders (SLS) The extruded modeling material fuses to previously deposited modeling material, and solidifies upon a drop in temperature. For example, the position of the extrusion head relative to the substrate is then incremented along a z-axis (perpendicular to the x-y plane), and the process is then repeated to form a 3D model resembling the digital representation. Movement of the extrusion head with respect to the substrate is performed under computer control, in accordance with build data that represents the 3D model. The build data is obtained by initially slicing the digital representation of the 3D model into multiple horizontally sliced layers. Then, for each sliced layer, the host computer generates a build path for depositing roads of modeling material to form the 3D model.

In the printing process the plate plays an important role, in fact the plate has to hold the printing object un such a way that the latter does not move during the printing but allowing the object to be easily removed when the printing is terminated.

Materials & design, vol 83, 20 June 2015, 768-776 relates to the use of polypropylene as filament for extrusion 3d printing.

In the art various substance are used depending also to the material to be printed. For example ABS is printed with good results on a heated glass plated covered with vinylic glue.

However there is the need in the art for new materials to be used as plate especially for printing polyolefin based materials.

### SUMMARY OF THE INVENTION

The applicant found that a plate comprising as a top layer a sheet or film comprising a polyolefin composition A) can be advantageously used as plate for extrusion-based 3D printing; wherein polyolefin composition A) comprises:

(i) 5-35% by weight; of a propylene homopolymer containing 5% by weight or less of a fraction soluble in xylene at 25°C ($XS_i$) the fraction $XS_i$ being referred to the weight of (i);

(ii) 20-50% by weight; of a copolymer of ethylene and a $C_3$-$C_8$ alpha-olefin containing from 0.1% to 20% by weight; of alpha-olefin units and containing 25% by weight or less; of a fraction soluble in xylene at 25°C ($XS_{ii}$), both the amount of alpha-olefin units and of the fraction $XS_B$ being referred to the weight of (ii); and

(iii)30-60% by weight of a copolymer of ethylene and propylene containing from 25% to 75% by weight; of ethylene units and containing from 40% to 95% by weight of a fraction soluble in xylene at 25°C ($XS_{iii}$), both the amount of ethylene units and of the fraction $XS_{iii}$ being referred to the weight of (iii);

the amounts of (i), (ii) and (iii) being referred to the total weight of (i) + (ii) + (iii), the sum of the amount of (i), (ii) and (iii) being 100.

### BRIEF DESCRIPTION OF THE DRAWINGS

Figure 1 is the front view of the sample used in the print tests of the examples. The measure are given in mm, the sample once completely printed is 5 mm thick.

### DETAILED DESCRIPTION OF THE INVENTION

The applicant found that a plate comprising as a top layer a sheet or film comprising a polyolefin composition A) can be advantageously used as plate for extrusion-based 3D printing; wherein polyolefin composition comprises:

(i) 5-35% by weight; preferably 10-30 % by weight; more preferably 15-23% by weight of a propylene homopolymer containing 5% by weight or less of a fraction soluble in xylene at 25°C ($XS_i$) the amount of propylene units and of

the fraction $XS_i$ being referred to the weight of (i);
(ii) 20-50% by weight; preferably 25-45% by weight; more preferably 30-40 % by weight copolymer of ethylene and a $C_3$-$C_8$ alpha-olefin containing from 0.1% to 20% by weight; preferably from 5% to 15 % by weight; more preferably from 7 % to 12 % by weight of alpha-olefin units and containing 25% by weight or less; preferably from 20% by weight or less; preferably 17% by weight or less of a fraction soluble in xylene at 25°C ($XS_{ii}$), both the amount of alpha-olefin units and of the fraction $XS_B$ being referred to the weight of (ii); and
(iii)30-60% by weight; preferably 35-55% by weight; more preferably 40-50 % by weight of a copolymer of ethylene and propylene containing from 25% to 75% by weight; preferably from 37% to 65% by weight; more preferably from 45% to 58% by weight of ethylene units and containing from 40% to 95% by weight of a fraction soluble in xylene at 25°C ($XS_{iii}$), both the amount of ethylene units and of the fraction $XS_{iii}$ being referred to the weight of (iii);

the amounts of (i), (ii) and (iii) being referred to the total weight of (i) + (ii) + (iii), the sum of the amount of (i), (ii) and (iii) being 100.

Component (i) preferably has the melt flow rate (230°C/2.16 kg) ranging between 50 and 200 g/10 min; more preferably between 80 and 170 g/10 min.

Preferably components (i) + (ii) blended together have the melt flow rate (230°C/2.16 kg) comprised between 0.1 and 60 g/10 min. preferably between 1 and 50 g/10 min; more preferably between 8 and 40 g/10 min.

Preferably component (ii) has a density (determined according to ISO 1183 at 23°C) of from 0.900 to 0.965 $g/cm^3$. Component ii) is an ethylene copolymer containing $C_3$-$C_8$ alpha-olefin derived units. Specific examples of such alpha-olefin comonomers are propylene, 1-butene, 1-pentene, 4-methyl-1-pentene, 1-hexene and 1-octene; 1-butene 1-hexene and 1-octene being preferred; 1-butene being the most preferred.

Preferably the polyolefin composition A) has a melt flow rate (230°C/2.16 kg) comprised between 0.1 and 6.0 g/10 min; preferably between 0.5 and 5.5 g/10 min; more preferably between 1.0 and 5.0 g/10 min.

Preferably the polyolefin composition A) has an intrinsic viscosity [$\eta$] (measured in tetrahydronaphthalene at 135 °C) of the xylene soluble fraction at 25°C comprised between 1.0 to 4.0 dl/g preferably the intrinsic viscosity is comprised between 1.5 and 3.5 dl/g; more preferably the intrinsic viscosity is comprised between 2.0 and 3.0 dl/g.

For the present disclosure the term "copolymer" comprises only polymers containing two kinds of comonomers such as propylene and ethylene or ethylene and 1-butene.

The comonomer content is measured by using 13C-NMR.

The applicant found that a plate for use in an extrusion-based additive manufacturing system comprising as a top layer a sheet or film comprising composition A can be advantageously used as plate for extrusion-based 3D printing.

For the purpose of this disclosure the term sheet is referred to sheet having thickness higher than 0.5 mm. For the purpose of this disclosure the term film is referred to sheet having thickness lower than 0.5 mm.

The other layers of the plate can be made of various materials such as polystyrene polypropylene, metals such as aluminum and can be also an heating plate, or a mono or multilayer film The top layer of said plate comprises at least 50 wt% , preferably at least 70 wt% more preferably at least 85 wt%; even more preferably more than 99 wt% of composition A. The plate can also be made entirely of a sheet or film of compostion A in this case the top layer is the only layer of the plate.

It has been found that the polyolefin composition A) can be prepared by a sequential polymerization, comprising at least three sequential steps, wherein components (i), (ii) and (iii) are prepared in separate subsequent steps, operating in each step, except the first step, in the presence of the polymer formed and the catalyst used in the preceding step. The catalyst is added only in the first step, however its activity is such that it is still active for all the subsequent steps.

The polymerization, which can be continuous or batch, is carried out following known techniques and operating in liquid phase, in the presence or not of inert diluent, or in gas phase, or by mixed liquid-gas techniques. It is preferable to carry out the polymerization in gas phase.

Reaction time, pressure and temperature relative to the polymerization steps are not critical, however it is best if the temperature is from 50 to 100 °C. The pressure can be atmospheric or higher.

The regulation of the molecular weight is carried out by using known regulators, hydrogen in particular.

The said polymerizations are preferably carried out in the presence of a Ziegler-Natta catalyst. Typically a Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on $MgCl_2$.

Particularly preferred catalysts comprise the product of the reaction of said organometallic compound of group 1, 2 or 13 of the Periodic Table of elements, with a solid catalyst component comprising a Ti compound and an electron donor compound supported on $MgCl_2$.

Preferred organometallic compounds are the aluminum alkyl compounds.

Thus in a preferred embodiment, the polymer composition A) of the present invention is obtainable by using a

Ziegler-Natta polymerization catalyst, more preferably a Ziegler-Natta catalyst supported on $MgCl_2$, even more preferably a Ziegler-Natta catalyst comprising the product of reaction of:

1) a solid catalyst component comprising a Ti compound and an electron donor (internal electron-donor) supported on $MgCl_2$;
2) an aluminum alkyl compound (cocatalyst); and, optionally,
3) an electron-donor compound (external electron-donor).

The solid catalyst component (1) contains as electron-donor a compound generally selected among the ethers, ketones, lactones, compounds containing N, P and/or S atoms, and mono- and dicarboxylic acid esters.
Catalysts having the above mentioned characteristics are well known in the patent literature; particularly advantageous are the catalysts described in US patent 4,399,054 and European patent 45977.
Particularly suited among the said electron-donor compounds are phthalic acid esters, preferably diisobutyl phthalate, and succinic acid esters.
Suitable succinic acid esters are represented by the formula (I):

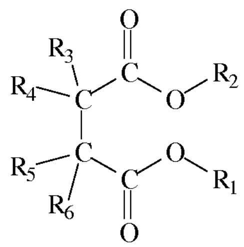

(I)

wherein the radicals $R_1$ and $R_2$, equal to or different from each other, are a $C_1$-$C_{20}$ linear or branched alkyl, alkenyl, cycloalkyl, aryl, arylalkyl or alkylaryl group, optionally containing heteroatoms; the radicals $R_3$ to $R_6$ equal to or different from each other, are hydrogen or a $C_1$-$C_{20}$ linear or branched alkyl, alkenyl, cycloalkyl, aryl, arylalkyl or alkylaryl group, optionally containing heteroatoms, and the radicals $R_3$ to $R_6$ which are joined to the same carbon atom can be linked together to form a cycle.
$R_1$ and $R_2$ are preferably $C_1$-$C_8$ alkyl, cycloalkyl, aryl, arylalkyl and alkylaryl groups. Particularly preferred are the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.
One of the preferred groups of compounds described by the formula (I) is that in which $R_3$ to $R_5$ are hydrogen and $R_6$ is a branched alkyl, cycloalkyl, aryl, arylalkyl and alkylaryl radical having from 3 to 10 carbon atoms. Another preferred group of compounds within those of formula (I) is that in which at least two radicals from $R_3$ to $R_6$ are different from hydrogen and are selected from $C_1$-$C_{20}$ linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is $R_3$ and $R_5$ or $R_4$ and $R_6$ are particularly preferred.
Other electron-donors particularly suited are the 1,3-diethers, as illustrated in published European patent applications EP-A-361 493 and 728769.
As cocatalysts (2), one preferably uses the trialkyl aluminum compounds, such as Al-triethyl, Al-triisobutyl and Al-tri-n-butyl.
The electron-donor compounds (3) that can be used as external electron-donors (added to the Al-alkyl compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical).
Examples of the said silicon compounds are those of formula $R^1{}_aR^2{}_bSi(OR^3)_c$, where a and b are integer numbers from 0 to 2, c is an integer from 1 to 3 and the sum (a+b+c) is 4; $R^1$, $R^2$ and $R^3$ are alkyl, cycloalkyl or aryl radicals with 1-18 carbon atoms optionally containing heteroatoms.
Useful examples of silicon compounds are (tert-butyl)$_2$Si($OCH_3$)$_2$, (cyclohexyl)(methyl)Si ($OCH_3$)$_2$, (phenyl)$_2$Si($OCH_3$)$_2$ and (cyclopentyl)$_2$Si($OCH_3$)$_2$.
The previously said 1,3- diethers are also suitable to be used as external donors. In the case that the internal donor is one of the said 1,3-diethers, the external donor can be omitted.
The catalysts may be precontacted with small quantities of olefin (prepolymerization), maintaining the catalyst in supension in a hydrocarbon solvent, and polymerizing at temperatures from room to 60 °C, thus producing a quantity

of polymer from 0.5 to 3 times the weight of the catalyst.

The operation can also take place in liquid monomer, producing, in this case, a quantity of polymer up to 1000 times the weight of the catalyst.

the polyolefin composition A) can also prepared as a physical blend of the separately-prepared components rather than as a reactor blend.

When a plate object of the present disclosure is used in a 3D printing process it is possible to realize the right adhesion force so that the object to be printed is stable during the printing process but it can be removed easily when the printed process ended and cohesion jointing is avoided.

Since the adhesion of the object on the plate is achieved by using only the surface of the plate itself the composition A) object of the present disclosure can be used even only as a film to be put on the plate itself as top layer. The film can be mono or multilayer and can content an adhesive on one or both sides This gives the advantage that the film can be easily replaced.

The plate object of the present invention can be also heated during the printing process, even if often not necessary, to improve the adhesion.

The plate can be used with different filaments such as propylene-based filaments, nylon based filaments ABS and PLA based filaments.

The following examples are given to illustrate and not to limit the present invention.

EXAMPLES

The data of the propylene polymer materials were obtained according to the following methods:

**CHARACTERIZATIONS**

**Xylene-soluble faction at 25°C (XS or Xs)**

The Xylene Soluble fraction was measured according to ISO 16152, 2005, but with the following deviations (between brakets what prescribed by the ISO 16152)

The solution volume is 250 ml (200 ml);

During the precipitation stage at 25°C for 30 min, the solution, for the final 10 minutes, is kept under agitation by a magnetic stirrer (30 min, without any stirring at all);

The final drying step is done under vacuum at 70°C (100 °C);

The content of said xylene-soluble fraction is expressed as a percentage of the original 2.5 grams and then, by difference (complementary to 100), the xylene unsoluble %;

XS of component B) and C) have been calculated by using the formula;

$$XS_{tot}=WaXS_A+WbXS_B+WcXS_C$$

wherein Wa, Wb and Wc are the relative amount of components A, B and C (A+B+C=1)

**Melt Flow Rate**

Measured according to ISO 1133 at 230°C with a load of 2.16 kg, unless otherwise specified.

**Intrinsic viscosity IV**

The sample is dissolved in tetrahydronaphthalene at 135 °C and then is poured into the capillary viscometer. The viscometer tube (Ubbelohde type) is surrounded by a cylindrical glass jacket; this setup allows temperature control with a circulating thermostated liquid. The downward passage of the meniscus is timed by a photoelectric device.

The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [$\eta$].

**Comonomer (C2 and C4) content determinated by using $^{13}C$ NMR**

$^{13}C$ NMR spectra of base polymers and their fractions were acquired on a Bruker AV600 spectrometer equipped with cryo probe, operating 150.91 MHz MHz in the Fourier transform mode at 120 °C. The peak of the Sδδ carbon (nomenclature according C.J. Carman, R.A. Harrington and C.E. Wilkes, Macromolecules, 10, 3, 536 (1977)) was used as internal reference at 29.7 ppm. About 30 mg of sample were dissolved in 0.5 ml of 1,1,2,2 tetrachloro ethane d2 at 120 °C. Each spectrum was acquired with a 90 ° pulse, 15 seconds of delay between pulses and CPD to remove 1H-$^{13}C$ coupling. 512 transients were stored in 65 K data points using a spectral window of 9000 Hz. The assignments of the spectra were made according to [M. Kakugo, Y. Naito, K. Mizunuma and T. Miyatake, Macromolecules, 16, 4, 1160 (2082)] and [E.T .Hsieh, J.C. Randall, Macromolecules, 15, 353-360 (1982)].

Triad distribution was obtained using the following relations:

$$PPP = 100\ I_{10} /\Sigma$$

$$PPE = 100\ I_6 /\Sigma EPE = 100\ I_5 /\Sigma$$

$$BBB = 100\ I_3 /\Sigma$$

$$BBE = 100\ I_2 /\Sigma$$

$$EBE = 100\ I_{11} /\Sigma$$

$$XEX = 100\ I_{12} /\Sigma$$

$$XEE = 100\ (I_1 + I_4)/\Sigma$$

$$EEE = 100\ (0.5\ I_9 + 0.25\ (I_7 + I_8))/\Sigma$$

wherein

$$\Sigma = I_1 + I_2 + I_3 + I_4 + I_5 + I_6 + 0.25\ I_7 + 0.25\ I_8 + 0.5\ I_9 + I_{10} + I_{11} + I_{12}$$

and wherein X can be propylene (P) or 1-butene (B), and $I_1$ to $I_{12}$ are the areas of the corresponding carbon atoms as reported below (only selected triads and assignements being reported):

| Number | Chemical Shift (ppm) | Carbon | Sequence |
|---|---|---|---|
| $I_1$ | 37.64 - 37.35 | $S_{\alpha\delta}$ | PEE |
| $I_2$ | 37.35 - 37.15 | $T_{\beta\delta}$ | BBE |
| $I_3$ | 35.27 - 34.92 | $T_{\beta\beta}$ | BBB |
| $I_4$ | 34.39 - 33.80 | $S_{\alpha\delta}$ | BEE |
| $I_5$ | 33.13 | $T_{\delta\delta}$ | EPE |
| $I_6$ | 30.93 - 30.77 | $T_{\beta\delta}$ | PPE |
| $I_7$ | 30.39 | $S_{\gamma\delta}$ | BEEE |
| $I_8$ | 30.29 | $S_{\gamma\delta}$ | PEEE |

(continued)

| Number | Chemical Shift (ppm) | Carbon | Sequence |
|---|---|---|---|
| $I_9$ | 29.97 | $S_{\delta\delta}$ | EEE |
| $I_{10}$ | 29.14 -28.31 | $T_{\beta\beta}$ | PPP |
| $I_{11}$ | 26.70 - 26.55 | $2B_2$ | EBE |
| $I_{12}$ | 24.88 - 24.14 | $S_{\beta\beta}$ | XEX |

The molar content of ethylene (E), of propylene (P) and of 1-butene (B) is obtained from triads using the following relations:

$$E\ (m\%) = EEE + XEE + XEX$$

$$P\ (m\%) = PPP + PPE + EPE$$

$$B\ (m\%) = BBB + BBE + EBE$$

Other comonomers can be easily determined by using NMR procedures known in the

**Melt flow rate (MFR)**

The melt flow rate MFR of the polymer was determined according to ISO 1133 (230°C, 2.16 Kg or 190°C;/2,16 kg)

**The following commercial polymers have been used for the plates**

Adflex Q100F is an heterophasic propylene ethylene copolymer having an MFR of 0.6 g/10 min (230°C, 2.16 Kg) sold by Lyondellbasell

Filaments

Polymers PP4 and PP5 have been extruted to form a filament having 1.75 mm of diameter.
PP4 is commercial grade ADSYL 5C30F sold by Lyondellbasell
PP5 is commercial grade RP 210M sold by Lyondellbasell
Commercial PLA filament has been further used

**Examples 1 - Preparation of polyolefin composition component A**

Catalyst precursor

The solid catalyst component used in polymerization is a Ziegler-Natta catalyst component supported on magnesium chloride, containing titanium and diisobutylphthalate as internal donor, prepared as follows. An initial amount of microspheroidal $MgCl2 \cdot 2.8C2H5OH$ was prepared according to the method described in Example 2 of USP 4,399,054 but operating at 3,000 rpm instead of 10,000. The so obtained adduct was then subject to thermal dealcoholation at increasing temperatures from 30 to 130°C operating in nitrogen current until the molar alcohol content per mol of Mg is 1.16. Into a 1000 mL four-necked round flask, purged with nitrogen, 500 mL of TiCl4 were introduced at 0°C. While stirring, 30 grams of the microspheroidal $MgCl2 \cdot 1.16C2H5OH$ adduct (prepared as described above) were added. The temperature was raised to 120°C and kept at this value for 60 minutes. During the temperature increase, an amount of diisobutylphthalate was added such as to have a Mg/ diisobutylphthalate molar ratio of 18. After the mentioned 60 minutes, the stirring was stopped, the liquid siphoned off and the treatment with TiCl4 was repeated at 100°C for 1 hour in the presence of an amount of diisobutylphthalate such as to have a Mg/ diisobutylphthalate molar ratio of 27. After that time the stirring was stopped, the liquid siphoned off and the treatment with TiCl4 was repeated at 100°C for 30 min. After sedimentation and siphoning at 85°C the solid was washed six times with anhydrous hexane (6 x 100 ml) at 60 °C.

Catalyst system and prepolymerization

Before introducing it into the polymerization reactors, the solid catalyst component described above is contacted at 30 °C for 9 minutes with aluminum triethyl (TEAL) and dicyclopentyldimethoxysilane (DCPMS), in a TEAL/DCPMS weight ratio equal to about 15 and in such quantity that the TEAL/solid catalyst component weight ratio be equal to 4.
The catalyst system is then subjected to prepolymerization by maintaining it in suspension in liquid propylene at 50 °C for about 75 minutes before introducing it into the first polymerization reactor.

Polymerization

The polymerization is carried out in continuous in a series of three gas-phase reactors equipped with devices to transfer the product from the first reactor to the second one. Into the first gas phase polymerization reactor a propylene-based polymer (i) is produced by feeding in a continuous and constant flow the prepolymerized catalyst system, hydrogen (used as molecular weight regulator) and propylene all in the gas state. The propylene-based polymer (i) coming from the first reactor is discharged in a continuous flow and, after having been purged of unreacted monomers, is introduced, in a continuous flow, into the second gas phase reactor, together with quantitatively constant flows of hydrogen and ethylene, all in the gas state. In the second reactor a copolymer of ethylene (ii) is produced. The product coming from the second reactor is discharged in a continuous flow and, after having been purged of unreacted monomers, is introduced, in a continuous flow, into the third gas phase reactor, together with quantitatively constant flows of hydrogen, ethylene and propylene all in the gas state. In the third reactor an ethylene-propylene polymer (iii) is produced. Polymerization conditions, molar ratio of the reactants and composition of the copolymers obtained are shown in Table 1. The polymer particles exiting the third reactor are subjected to a steam treatment to remove the reactive monomers and volatile substances, and then dried. Thereafter the polymer particles are mixed with a usual stabilizing additive composition in a twin screw extruder Berstorff ZE 25 (length/diameter ratio of screws: 34) and extruded under nitrogen atmosphere in the following conditions:

| | |
|---|---|
| Rotation speed: | 250 rpm; |
| Extruder output: | 15 kg/hour; |
| Melt temperature: | 245 °C. |

The stabilizing additive composition is made of the following components:

- 0.1% by weight of Irganox® 1010;
- 0.1% by weight of Irgafos® 168;
- 0.04% by weight of DHT-4A (hydrotalcite);

all percent amounts being referred to the total weight of the polymer and stabilizing additive composition.
The said Irganox® 1010 is 2,2-bis[3-[,5-bis(1,1-dimethylethyl)-4-hydroxyphenyl)-1-oxopropoxy]methyl]-1,3-propanediyl-3,5-bis(1,1-dimethylethyl)-4-hydroxybenzene-propanoate, while Irgafos® 168 is tris(2,4-di-tert.-butylphenyl)phosphite. The characteristics relating to the polymer composition, reported in Table 2, are obtained from measurements carried out on the so extruded polymer, which constitutes the stabilized ethylene polymer composition according to the exemplary embodiments disclosed herein.

Table 1 - Polymerization conditions

| Example | | 1 |
|---|---|---|
| 1st Reactor - component (i) | | |
| Temperature | °C | 60 |
| Pressure | barg | 16 |
| $H_2/C_3$- | mol. | 0.24 |
| Split | wt% | 22 |
| Xylene soluble of (i) ($XS_i$) | wt% | 4.2 |
| MFR of (i) | g/10 min. | 110 |

(continued)

| | | |
|---|---|---|
| 2nd Reactor - component (ii) | | |
| Temperature | °C | 80 |
| Pressure | barg | 18 |
| $H_2/C_2$- | mol. | 0.81 |
| $C_4$-/($C_2$- + $C_4$-) | mol. | 0.25 |
| Split | wt% | 32 |
| $C_2$-content of i * | wt% | 90 |
| $C_4$-content of i * | wt% | 10 |
| Xylene soluble of i ($XS_i$) * | wt% | 16.0 |
| Xylene soluble of (i + i) | wt% | 12.0 |
| MFR of (i + ii) | g/10 min. | 35.9 |
| 3rd Reactor - component (iii) | | |
| Temperature | °C | 65 |
| Pressure | barg | 18 |
| $H_2/C_2$- | mol. | 0.17 |
| $C_2$-/($C_2$- + $C_3$-) | mol. | 0.42 |
| Split | wt% | 46 |
| $C_2$-content of iii * | wt% | 52 |
| Xylene soluble of (iii) ($XS_{iii}$)* | wt% | 83 |

Table 2 properties of component A

| Example | | 1 |
|---|---|---|
| component i | | |
| C2 content | wt% | 0 |
| XSi | wt% | 4.2 |
| MFR | g/10 min | 110 |
| split | wt% | 22 |
| component ii | | |
| XSi* | wt% | 16 |
| C2 content* | wt% | 90.0 |
| C4 content* | wt% | 10.0 |
| split | wt% | 32 |
| MFR i+ii | g/10 min | 35.9 |
| Component iii | | |
| XSi* | wt% | 83 |
| C2 content* | wt% | 52 |
| split | wt% | 46 |

(continued)

| | | |
|---|---|---|
| total composition | | |
| MFR | g/10 min | 1.61 |
| IV on soluble in Xylene | dl/g | 2.4 |
| C2- = ethylene; C3- = propylene; C4- = 1-butene (IR); split = amount of polymer produced in the concerned reactor.<br>* Calculated values. | | |

Plates have been obtained by injection moulding to produce a sheet having a thicknes of about 2 mm from the polymer obtained in Example 1 and Adflex Q100F used as comparative example.

**Print test**

The printer was a 3D Rostock delta printer. The printer conditions are the followings:

| | | |
|---|---|---|
| Filament diameter | mm | 1,75 ±0.03 |
| Nozzle diameter | mm | 0,4 |
| | | |
| Temperature first layer | °C | 245 |
| Temperature other layers | °C | 245 |
| | | 1 |
| Layer high | mm | 0,2 |
| Infill | | 100% |
| printer speed | mm/min | 3600 |
| Speed first layer | | 60% |
| Speed other layers | | 100% |
| Speed infill | mm/min | 4.000 |

The sample to be printed is reported in Fig 1. For each filament two printer tests have been carried out at 40°C and room temperature (i.e. no heating applied). At the end of the printing the adhesion of the plate has been verified The results are reported on table 1.

Table 1

| Plate | PP4 40°C | PP4 RT | PP5 40°C | PP5 RT | PLA RT |
|---|---|---|---|---|---|
| Q100F* | A2 | C3 | C1 | C3 | C0 |
| Example 1 | A3 | A2 | A3 | A3 | A2 |
| * comparative<br>RT room temperature<br>A= the joint is adhesive and can be removed<br>C= the joint is cohesive<br>0= no adeshion or coeshion<br>3= perfect adhesion or cohesion | | | | | |

Thus A value of A3 means that the adhesion is perfect and the object can be printed and removed.

From table 1 clearly results that a plate based the polymer of example 1 can be advantageously used giving perfect adhesion with various materials while the plates of the comparative examples does not gives adhesion or the adhesion is poor and the object cannot be printed.

## Claims

1. Use of a sheet or film comprising a polyolefin composition A) as a top layer of a plate for use in an extrusion-based additive manufacturing system wherein polyolefin composition A) comprises:

   (i) 5-35% by weight; of a propylene homopolymer containing 5% by weight or less of a fraction soluble in xylene at 25°C ($XS_i$), the fraction $XS_i$ being referred to the weight of (i);
   (ii) 20-50% by weight; of a copolymer of ethylene and a $C_3$-$C_8$ alpha-olefin containing from 0.1% to 20% by weight; of alpha-olefin units and containing 25% by weight or less; of a fraction soluble in xylene at 25°C ($XS_{ii}$), both the amount of alpha-olefin units and of the fraction $XS_{ii}$ being referred to the weight of (ii); and
   (iii) 30-60% by weight of a copolymer of ethylene and propylene containing from 25% to 75% by weight; of ethylene units and containing from 40% to 95% by weight of a fraction soluble in xylene at 25°C ($XS_{iii}$), both the amount of ethylene units and of the fraction $XS_{iii}$ being referred to the weight of (iii);

   the amounts of (i), (ii) and (iii) being referred to the total weight of (i) + (ii) + (iii), the sum of the amount of (i), (ii) and (iii) being 100.

2. The use of the sheet or film according to claim 1 wherein component i) is a propylene homopolymer.

3. The use of the sheet or film according to claims 1 or 2 wherein component i) ranges from 10% to 30 % by weight; component ii) ranges from 25% to 45 % by weight; and component iii) ranges from 35% to 55 % by weight.

4. The use the sheet or film according to anyone of claims 1-3 wherein component (i) has the melt flow rate (230°C/2.16 kg) ranging between 50 and 200 g/10 min.

5. The use the sheet or film according to anyone of claims 1-4 wherein components (i) + (ii) blended together have the melt flow rate (230°C/2.16 kg) comprised between 0.1 and 60 g/10 min

6. The use of the sheet or film according to anyone of claims 1-5 wherein polyolefin composition A) has a melt flow rate (230°C/2.16 kg) comprised between 0.1 and 6.0 g/10 min.

7. The use of the sheet or film according to anyone of claims 1-6 wherein the polyolefin composition A) has an intrinsic viscosity [η] (measured in tetrahydronaphthalene at 135 °C) of the xylene soluble fraction at 25°C comprised between 1.0 to 4.0 dl/g

8. The use of the sheet or film according to anyone of claims 1-7 wherein the top layer of said plate comprises at least 50 wt% of the polyolefin composition A) .

9. The use of the sheet or film according to anyone of claims 1-8 wherein the top layer of said plate comprises at least 70 wt% of the polyolefin composition A).

10. The use of the sheet or film according to anyone of claims 1-9 wherein the plate is made entirely of a sheet or film of the polyolefin composition A).

## Patentansprüche

1. Verwendung einer Lage oder eines Films, die/der eine Polyolefinzusammensetzung A) umfasst, als Deckschicht einer Platte zur Verwendung in einem additiven Fertigungssystem, wobei Polyolefinzusammensetzung A) umfasst:

   (i) 5 bis 35 Gew.% eines Propylenhomopolymers, das 5 Gew.% oder weniger von einer in Xylol bei 25 °C ($XS_i$) löslichen Fraktion enthält, wobei die Fraktion $XS_i$ sich auf das Gewicht von (i) bezieht;
   (ii) 20 bis 50 Gew.% eines Copolymers von Ethylen und einem $C_3$- bis $C_8$-alpha-Olefin, das 0,1 Gew.% bis 20 Gew.% alpha-Olefineinheiten enthält und 25 Gew.% oder weniger von einer in Xylol bei 25 °C löslichen Fraktion ($XS_{ii}$) enthält, wobei sich sowohl die Menge der alpha-Olefineinheiten als auch diejenige der Fraktion XSii auf das Gewicht von (ii) beziehen; und

(iii) 30 bis 60 Gew.% eines Copolymers von Ethylen und Propylen, das 25 Gew.% bis 75 Gew.% Ethyleneinheiten enthält und 40 Gew.% bis 95 Gew.% von einer in Xylol bei 25 °C löslichen Fraktion (XSiii) enthält, wobei sich sowohl die Menge der Ethyleneinheiten als auch diejenige der Fraktion $XS_{iii}$ auf das Gewicht von (iii) beziehen;

die Mengen von (i), (ii) und (iii) sich auf das Gesamtgewicht von (i) + (ii) + (iii) beziehen, wobei die Summe der Mengen von (i), (ii) und (iii) 100 ergibt.

**2.** Verwendung der Lage oder des Films nach Anspruch 1, wobei Komponente i) ein Propylenhomopolymer ist.

**3.** Verwendung der Lage oder des Films nach Anspruch 1 oder 2, wobei Komponente i) im Bereich von 10 Gew.% bis 30 Gew.% liegt; Komponente ii) im Bereich von 25 Gew.% bis 45 Gew.% liegt; und Komponente iii) im Bereich von 35 Gew.% bis 55 Gew.% liegt.

**4.** Verwendung der Lage oder des Films nach einem der Ansprüche 1 bis 3, wobei Komponente (i) eine Schmelzflussrate (230 °C/2,16 kg) im Bereich von 50 bis 200 g/10 min aufweist.

**5.** Verwendung der Lage oder des Films nach einem der Ansprüche 1 bis 4, wobei Komponenten (i) + (ii) miteinander vermischt eine Schmelzflussrate (230 °C/2, 16 kg) im Bereich von 0,1 bis 60 g/10 min aufweisen.

**6.** Verwendung der Lage oder des Films nach einem der Ansprüche 1 bis 5, wobei Polyolefinzusammensetzung A) eine Schmelzflussrate (230 °C/2,16 kg) aufweist, die zwischen 0,1 und 6,0 g/10 min liegt.

**7.** Verwendung der Lage oder des Films nach einem der Ansprüche 1 bis 6, wobei die Polyolefinzusammensetzung A) eine Grenzviskosität [η] (gemessen in Tetrahydronaphthalin bei 135 °C) der in Xylol löslichen Fraktion bei 25 °C aufweist, die zwischen 1,0 und 4,0 dl/g liegt.

**8.** Verwendung der Lage oder des Films nach einem der Ansprüche 1 bis 7, wobei die Deckschicht der Platte mindestens 50 Gew.% der Polyolefinzusammensetzung A) umfasst.

**9.** Verwendung der Lage oder des Films nach einem der Ansprüche 1 bis 8, wobei die Deckschicht der Platte mindestens 70 Gew.% der Polyolefinzusammensetzung A) umfasst.

**10.** Verwendung der Lage oder des Films nach einem der Ansprüche 1 bis 9, wobei die Platte vollständig aus einer Lage oder einem Film der Polyolefinzusammensetzung A) gefertigt ist.

## Revendications

**1.** Utilisation d'une feuille ou d'un film comprenant une composition polyoléfinique A) en tant que couche supérieure d'une plaque destinée à être utilisée dans un système de fabrication additive basé sur l'extrusion
la composition polyoléfinique A) comprenant :

(i) 5-35% en poids d'un homopolymère de propylène contenant 5% en poids ou moins d'une fraction soluble dans le xylène à 25°C (XSi), la fraction XSi se rapportant au poids de (i) ;
(ii) 20-50% en poids d'un copolymère d'éthylène et d'une alpha-oléfine en $C_3$-$C_8$ contenant 0,1% à 20% en poids de motifs d'alpha-oléfine et contenant 25% en poids ou moins d'une fraction soluble dans le xylène à 25°C ($XS_{ii}$), à la fois la quantité de motifs d'alpha-oléfine et de la fraction $XS_{ii}$ se rapportant au poids de (ii) ; et
(iii) 30 -60% en poids d'un copolymère d'éthylène et de propylène contenant 25% à 75% en poids de motifs d'éthylène et contenant 40% à 95% en poids d'une fraction soluble dans le xylène à 25°C ($XS_{iii}$), à la fois la quantité de motifs d'éthylène et de la fraction $XS_{iii}$ se rapportant au poids de (iii) ;

les quantités de (i), (ii) et (iii) se rapportant au poids total de (i) + (ii) + (iii), la somme de la quantité de (i), de (ii) et de (iii) valant 100.

**2.** Utilisation de la feuille ou du film selon la revendication 1, le constituant i) étant un homopolymère de propylène.

**3.** Utilisation de la feuille ou du film selon les revendications 1 ou 2, le constituant i) étant situé dans la plage de 10% à 30% en poids ; le constituant ii) étant situé dans la plage de 25% à 45% en poids ; et le constituant iii) étant situé

dans la plage de 35% à 55% en poids.

4. Utilisation de la feuille ou du film selon l'une quelconque des revendications 1 à 3, le constituant (i) présentant un indice de fluidité à chaud (230°C/2,16 kg) situé dans la plage entre 50 et 200 g/10 min.

5. Utilisation de la feuille ou du film selon l'une quelconque des revendications 1 à 4, les constituants (i) + (ii) mélangés ensemble présentant un indice de fluidité à chaud (230°C/2,16 kg) compris entre 0,1 et 60 g/10 min

6. Utilisation de la feuille ou du film selon l'une quelconque des revendications 1 à 5, la composition polyoléfinique A) présentant un indice de fluidité à chaud (230°C/2,16 kg) compris entre 0,1 et 6,0 g/10 min.

7. Utilisation de la feuille ou du film selon l'une quelconque des revendications 1 à 6, la composition polyoléfinique A) présentant une viscosité intrinsèque [$\eta$] (mesurée dans le tétrahydronaphtalène à 135°C) de la fraction soluble dans le xylène à 25°C comprise entre 1,0 et 4,0 dl/g

8. Utilisation de la feuille ou du film selon l'une quelconque des revendications 1 à 7, la couche supérieure de ladite plaque comprenant au moins 50% en poids de la composition polyoléfinique A).

9. Utilisation de la feuille ou du film selon l'une quelconque des revendications 1 à 8, la couche supérieure de ladite plaque comprenant au moins 70% en poids de la composition polyoléfinique A).

10. Utilisation de la feuille ou du film selon l'une quelconque des revendications 1 à 9, la plaque étant entièrement constituée d'une feuille ou d'un film de la composition polyoléfinique A).

FIG 1

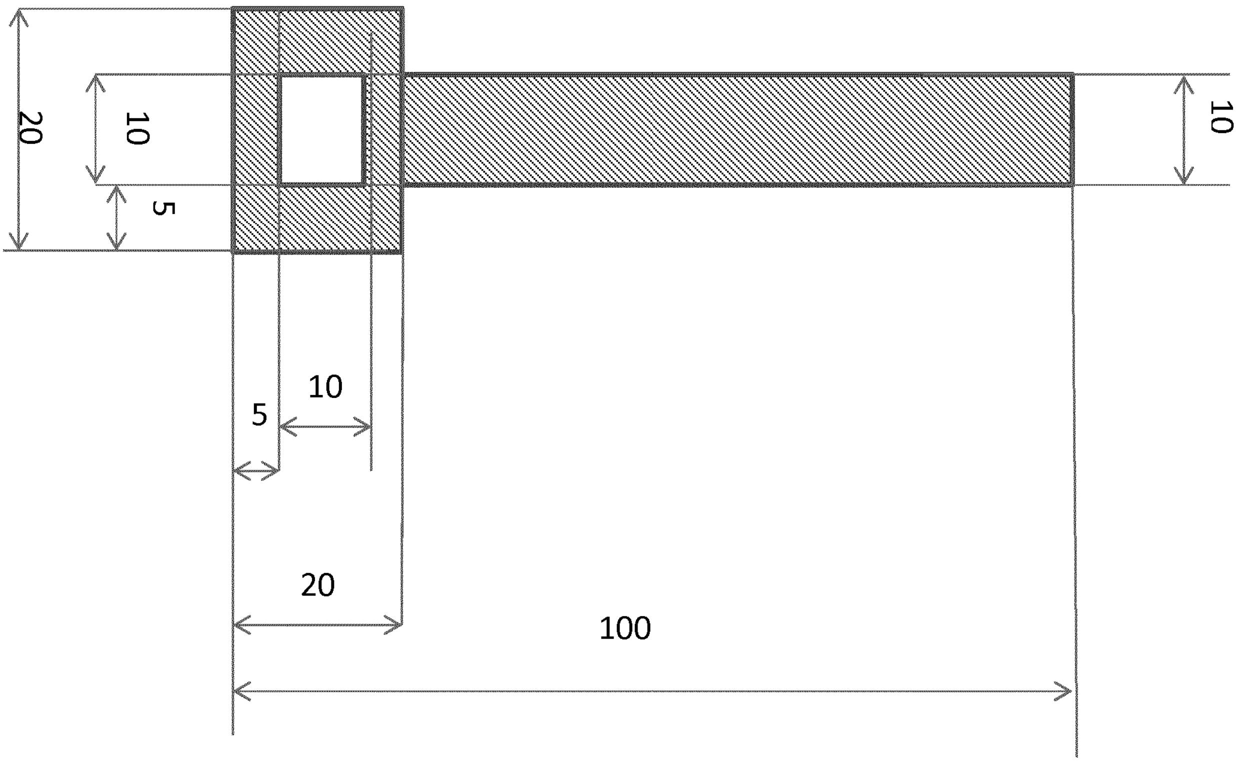

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4399054 A
- EP 45977 A
- EP 361493 A
- EP 728769 A

### Non-patent literature cited in the description


- *Materials & design,* 20 June 2015, vol. 83, 768-776
- **HUGGINS, M.L.** *J. Am. Chem. Soc.,* 1942, vol. 64, 2716
- **M. KAKUGO ; Y. NAITO ; K. MIZUNUMA ; T. MIYATAKE.** *Macromolecules,* 2082, vol. 16 (4), 1160
- **E.T .HSIEH ; J.C. RANDALL.** *Macromolecules,* 1982, vol. 15, 353-360